# EUROPÄISCHE PATENTSCHRIFT

(11) **EP 2 306 098 B1**
(45) Veröffentlichungstag und Bekanntmachung des Hinweises auf die Patenterteilung: **23.10.2013**
(21) Anmeldenummer: 10401131.7
(22) Anmeldetag: 10.08.2010
(51) Int. Cl.: F24D 3/10, F24H 9/14, F16L 59/16

(54) **Anordnung zur wärmedämmenden Installation von Rohrleitungsabschnitten mit integrierten Armaturen**
Assembly for the heat-insulating installation of pipe sections with integrated fittings
Arrangement pour l'installation isolante des sections de tuyau avec robinetterie intégrée

(30) Priorität: 30.09.2009 DE 102009043543
(43) Veröffentlichungstag der Anmeldung: 06.04.2011
(73) Patentinhaber: Oventrop GmbH & Co. KG, 59939 Olsberg (DE)
(72) Erfinder: Droste, Thomas, 59909 Bestwig (DE); Salzmann, Andreas, 59929 Brilon (DE)
(74) Vertreter: Köchling, Conrad-Joachim

(56) Entgegenhaltungen:
- EP-A1- 0 561 037
- DE-A1-102005 014 869
- DE-A1-102007 047 667
- DE-U1- 9 411 684

## Beschreibung

Die Erfindung betrifft eine Anordnung zur wärmedämmenden Installation von zwei zueinander parallelen Rohrleitungsabschnitten mit integrierten Armaturen oder Armaturenbaugruppen und in einen Rohrleitungsabschnitt integrierter Pumpe, wobei die Rohrleitungsabschnitte samt Armaturen oder Armaturenbaugruppen und Pumpe von einem Gehäuse aus Wärme-Isoliermaterial umgeben sind und das Gehäuse aus einer Unterschale, einer Oberschale sowie einem in eine Ausnehmung der Oberschale eingepassten Gehäusezusatzteil besteht, wobei die Ausnehmung und das Gehäusezusatzteil einen Teilbereich beider Rohrleitungsabschnitte überdeckt.

Solche Anordnungen werden für in Rohrleitungsabschnitte integrierte Armaturen von Heizungs-, Solar- und Kühlanlagen verwendet.

Eine gattungsgemäße Anordnung ist aus der DE 10 2005 014 869 A1 bekannt. Bei der bekannten Anordnung sind zwei parallele Rohrleitungsabschnitte mit integrierten Armaturen oder Armaturenbaugruppen vorgesehen, wobei diese Rohrleitungsabschnitte samt Armaturen in einem Gehäuse aus wärmedämmendem Material angeordnet sind. Hierbei ist es bekannt, das ein- oder mehrteilige Gehäuse aus wärmeisolierendem Material im Frontbereich mit mindestens einer Ausnehmung auszubilden, in die ein Regler oder Reglerteile eingesetzt werden können. Das Gehäuse ist dabei, wie dies auch die Erfindung vorsieht, so ausgebildet, dass insbesondere die Oberschale des Gehäuses Öffnungen für notwendige Funktions- und Anzeigeelemente aufweist.

Üblich ist es, in solche Rohrleitungsabschnitte, vorzugsweise in dem Rohrleitungsabschnitt, der den Vorlauf des Strömungskreises bildet, eine Pumpe zu integrieren. Zunehmend kommen dabei Hocheffizienzpumpen zum Einsatz, die relativ große Elektronikmodule aufweisen, die entgegen bisher verwendeter Pumpen keiner zu hohen Wärmebelastung innerhalb der gedämmten Armaturenanordnung ausgesetzt werden dürften, wobei solche Elektronikmodule selbst eine Eigenerwärmung generieren.

Die im Stand der Technik bekannte Ausbildung weist Durchbrüche oder Ausnehmungen zur Aufnahme von entsprechenden Komponenten, wie Reglern, Pumpen oder dergleichen auf. Die Oberschale des Gehäuses weist dabei Durchbrechungen auf, in denen Funktionselemente, wie zum Beispiele Griffe von Absperrarmaturen, zugänglich sind oder Thermometerangaben ablesbar sind. Auch sind üblicherweise Durchbrechungen in der Wärmedämmung eingearbeitet, die elektronische Regler mit zusätzlichen Teilen einer Wärmedämmung oder Elektronikteile von elektronisch geregelten Pumpen aufnehmen, damit diese aufgrund von Wärme- oder Kälteentwicklung der vom Medium durchströmten Armaturenbaugruppe nicht beschädigt werden. Solche meist vorgefertigten wärmegedämmten Armaturenbaugruppen werden in eine bauseitig vorhandene Rohrführung eingebaut. Die Mehrteiligkeit erlaubt zwar, insbesondere bei beengten Montagebedingungen, eine einfache Installation. Da aber oft erst vor Ort die Entscheidung für die Anordnung von Vor- und Rücklauf des Strömungskreises einer Heizungs- oder Kühlanlage vorliegt, ist beim Einsatz von Hocheffizienzpumpen mit größeren und wärmeempfindlicheren Elektronikbauteilen bei den bekannten Wärmeisolierungen nachteilig, dass bei einer veränderten Vor- und Rücklaufanordnung die Oberschale nicht weiter verwendet werden kann, da die Ausnehmungen und/oder der Durchbruch zu der Pumpe nicht mehr zu der Rohrleitungsanordnung passend sind. Es ist dann eine neu anzufertigende Oberschale erforderlich. Alternativ werden nachträglich zusätzliche Ausnehmungen oder Durchbrüche in die vorhandene Oberschale eingearbeitet, wobei die nicht mehr benutzten Ausnehmungen oder Durchbrüche mit einzelnen Elementen verschlossen werden müssen, um die ausreichende Wärmedämmung sicherzustellen. Außerdem besteht bei der Verwendung von Pumpen unterschiedlicher Hersteller der Nachteil, dass aufgrund der unterschiedlichen Pumpengeometrien jeweils eine eigene Oberschale herzustellen ist.

Ausgehend von diesem Stand der Technik liegt der Erfindung die Aufgabe zugrunde, eine Anordnung gattungsgemäßer Art zu schaffen, bei der dieselbe Oberschale sowohl für verschiedene Pumpengeometrien als auch für unterschiedliche Anordnungen der Pumpen im Vor- und Rücklauf des Strömungskreises einsetzbar ist.

Zur Lösung dieser Aufgabe wird vorgeschlagen, dass das Gehäusezusatzteil aus zwei aus Wärmeisoliermaterial bestehenden Modulen besteht, die zu einer Montageeinheit zusammensetzbar oder zusammengesetzt sind, wobei ein erstes Modul einen Teilbereich der Ausnehmung der Oberschale ausfüllt, der im Bereich eines ersten Rohrleitungsabschnittes liegt, und ein zweites Modul eine in den zweiten Rohrleitungsabschnitt integrierte Pumpe aufnimmt und umfasst, und dass das aus den beiden Modulen gebildete Gehäusezusatzteil in einer ersten Einbaulage in die Ausnehmung einsetzbar ist, in der das erste Modul den ersten Rohrleitungsabschnitt und das zweite Modul den zweiten Rohrleitungsabschnitt überdeckt, sowie in einer zweiten Einbaulage, in der das erste Modul den zweiten Rohrleitungsabschnitt und das zweite Modul den ersten Rohrleitungsabschnitt überdeckt.

Durch die erfindungsgemäße Ausbildung der beiden Module ist es möglich, die gleiche Anordnung zu verwenden, gleichgültig ob die Pumpen im Vor- oder Rücklauf, also in dem einen Rohrleitungsabschnitt oder in dem anderen Rohrleitungsabschnitt angeordnet sind. Je nach Anordnung der Pumpe in dem einen oder anderen Rohrleitungsabschnitt wird das entsprechende Modul an der erforderlichen Stelle eingesetzt, um die Pumpe aufzunehmen. Das andere Modul wird in der jeweils anderen Position angeordnet, um den dort befindlichen anderen Rohrleitungsabschnitt zu überdecken. Es ist somit in einfacher Weise erreicht, dass je nach Anordnung der Pumpe im Vor- oder Rücklauf das gleiche Gehäuseteil mit den gleichen Modulen verwendet werden kann, so dass keine zusätzlichen Kosten durch Austausch der Oberschale oder von Komponenten der Wärmedämmung entstehen. Auch bei der Verwendung verschiedener Pumpen mit unterschiedlicher Geometrie beschränkt sich die Anpassung auf das Ersetzen des einen Moduls, welches die Pumpe wärmeisolierend umfasst. Alle anderen Bestandteile können unverändert verwendet werden.

Beim letzteren Fall ist natürlich die Oberschale bei unterschiedlichen Pumpenanordnungen im Vor- oder Rücklauf weiter verwendbar.

Zudem ist vorgesehen, dass das erste Modul eine Oberseite aufweist, die Bestandteil der Oberseite der Oberschale ist und eine Unterseite, die der Unterschale zugewandt ist, und dass das zweite Modul eine Oberseite aufweist, die in Montagesolllage entweder Bestandteil der Oberseite der Oberschale oder der Unterschale zugewandt ist und eine Unterseite, die entweder der Unterschale zugewandt ist oder Bestandteil der Oberseite der Oberschale ist, wobei das zweite Modul in beiden Alternativlagen an das erste Modul anfügbar oder ansteckbar ist.

Durch diese Anordnung ist die Verwendbarkeit noch erweitert, da das zweite Modul je nach Ausbildung der Pumpe in der ersten Position oder in der zweiten Position installiert werden kann, um die entsprechende Pumpe oder deren Bestandteile aufzunehmen oder zu umfassen.

Bevorzugt ist dabei vorgesehen, dass das aus den beiden Modulen gebildete Gehäusezusatzteil zum Überführen aus der ersten Einbaulage in die zweite Einbaulage um eine gedachte Mittelachse um 180° drehbar ist, die orthogonal die Oberschale und die Unterschale durchsetzt.

Gemäß dieser Ausbildung kann die aus den Modulen gebildete Einheit um die gemeinsame Mittelachse gedreht in den Aufnahmebereich in zwei um einen Winkel von 180° gedrehte Positionen eingesetzt werden.

Zudem ist vorgesehen, dass das zweite Modul relativ zum ersten Modul um eine die beiden Module durchsetzende gedachte Längsachse um 180° drehbar ist, um eine der beiden Alternativlagen einzunehmen.

Gemäß dieser Ausbildung können die Module selbst zueinander um die gemeinsame Längsachse in zwei um 180° verdrehte Positionen zusammengefügt werden, wodurch sich die Anwendungsvielfalt noch verbessert.

Bei allen Ausführungsformen ist vorgesehen, dass das eine Modul, welches die Pumpe wärmeisolierend teilweise oder vollständig umfasst, einen Teil des Aufnahmebereiches der Oberschale ausfüllt, während das andere Modul den verbleibenden Teil ausfüllt, so dass eine vollständige Füllung des Aufnahmebereiches erfolgt.

Zudem kann vorgesehen sein, dass das zweite Modul, welches in Montagesolllage die Pumpe aufnimmt und umfasst, einen zur Außenseite der Oberschale offenen Bereich aufweist, in dem eine Steuerelektronik der Pumpe angeordnet ist.

Durch diese Ausbildung wird erreicht, dass das Modul, welches die Pumpe wärmeisolierend umfasst, so ausgebildet ist, dass die Steuerelektronik der Pumpe zwecks Abfuhr von Eigenwärme an die Umgebung aus der Wärmedämmung ausgenommen ist.

Zudem ist bevorzugt vorgesehen, dass die beiden Module ineinander greifende Führungs- und Klemmelemente aufweisen.

Durch diese Ausbildung wird eine ausreichend hohe Stabilität der zusammengefügten Module untereinander erreicht.

Bevorzugt ist hierzu vorgesehen, dass das erste Modul an seiner dem zweiten Modul zugewandten Seitenfläche eine polygonale Ausnehmung aufweist, und das zweite Modul an seiner dem ersten Modul zugewandten Seitenfläche einen passenden Steckzapfen aufweist, der in Montagesolllage in die Ausnehmung eingreift.

Hierdurch wird die vereinfachte Montage gefördert.

Zudem kann vorgesehen sein, dass die Unterschale einen Klemmsteg zwischen den beiden Rohrleitungsabschnitten aufweist, an dem sich ein Vorsprung des ersten Moduls abstützt, wobei eine dem zweiten Modul abgewandte Seitenfläche des ersten Moduls sich an einer Innenwand der Oberschale und/oder Unterschale abstützt.

Hierdurch wird die Stabilität der zusammengefügten Module mit dem Gehäuse, also der Oberschale und der Unterschale verbessert.

Zudem ist vorzugsweise vorgesehen, dass in Montagesolllage die Oberseite des ersten Moduls und/oder des zweiten Moduls bündig in der von der Oberseite der Oberschale aufgespannten Ebene liegt.

Durch eine solche Ausgestaltung wird erreicht, dass in der Montagesolllage die Außenflächen der Module mit der Außenfläche der Oberschale eine einheitliche Oberfläche bilden.

Ein Ausführungsbeispiel der Erfindung ist in der Zeichnung dargestellt und im Folgenden näher beschrieben.

Es zeigt:
Figur 1 eine erfindungsgemäße Anordnung in Ansicht;
Figur 2 eine Einzelheit der Anordnung jeweils in Ansicht;
Figur 3 die Einzelheit in einer alternativen Montagelage;

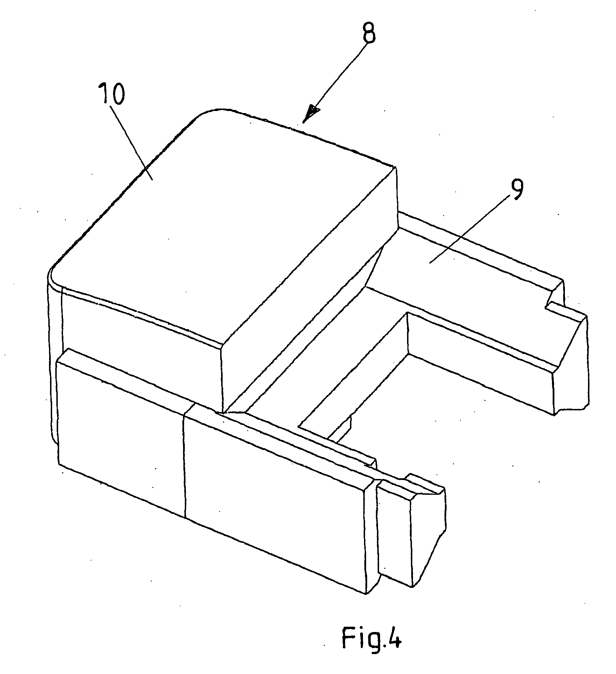

Figur 4 eine weitere Einzelheit in Ansicht;
Figur 5 die Einzelheit in einer Vormontageposition;
Figur 6 die Anordnung Figur 1 im Querschnitt gesehen.

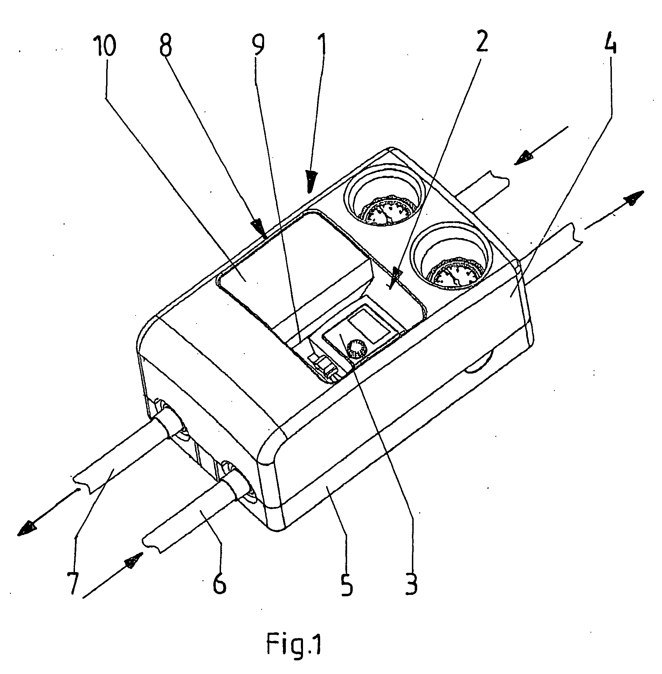

Insbesondere in Figur 1 ist eine Anordnung zur wärmedämmenden Installation von zueinander parallelen Rohrleitungsabschnitten 6, 7 mit integrierten Armaturen oder Armaturenbaugruppen und in einem Rohrleitungsabschnitt integrierter Pumpe gezeigt, wobei die Rohrleitungsabschnitte 6, 7 samt Armaturen oder Armaturenbaugruppen und Pumpe 3 von einem Gehäuse 1 aus Wärmeisoliermaterial umgeben sind. Das Gehäuse 1 besteht aus einer Unterschale 5 und einer Oberschale 4, wobei die Oberschale 4 eine Ausnehmung 2 aufweist, in die ein später noch erläutertes Gehäusezusatzteil eingesetzt werden kann. Die Ausnehmung 2 überdeckt einen Teilbereich beider Rohrleitungsabschnitte 6, 7. Im Ausführungsbeispiel ist der Rohrleitungsabschnitt 6 der Vorlauf des Strömungskreises, während der Rohrleitungsabschnitt 7 der Rücklauf des Strömungskreises sein soll.

Das Gehäusezusatzteil 8 besteht aus zwei aus Wärmeisoliermaterial bestehenden Modulen 9, 10, die zu einer Montageeinheit zusammensetzbar oder zusammengesetzt sind. Ein erstes Modul 10 füllt einen Teilbereich der Ausnehmung 2 der Oberschale 4 aus, der oberhalb eines ersten Rohrleitungsabschnittes liegt.

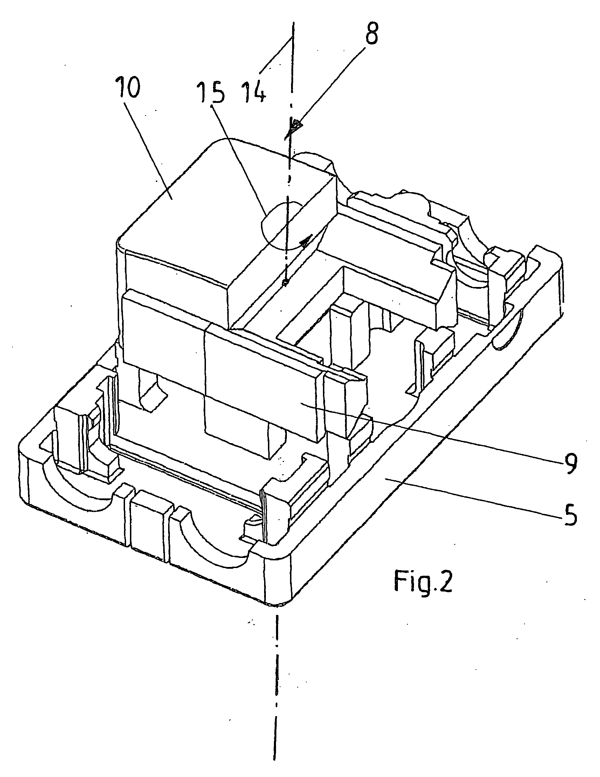

Im Ausführungsbeispiel gemäß Figur 1 und Figur 2 ist der Rohrleitungsabschnitt 7 der erste Rohrleitungsabschnitt. Ein zweites Modul 9 umfasst eine in den zweiten Rohrleitungsabschnitt integrierte Pumpe 3 und nimmt diese auf.

Im Ausführungsbeispiel gemäß Figur 1 und 2 ist der zweite Rohrleitungsabschnitt der Rohrleitungsabschnitt 6, der den Vorlauf des Strömungskreises bildet.

Das aus den beiden Modulen 9, 10 gebildete Gehäusezusatzteil 8 ist in einer ersten Einbaulage in die Ausnehmung 2 einsetzbar, in der das erste Modul 10 den ersten Rohrleitungsabschnitt 7 und das zweite Modul den zweiten Rohrleitungsabschnitt 6 überdeckt, in den die Pumpe 3 integriert ist.

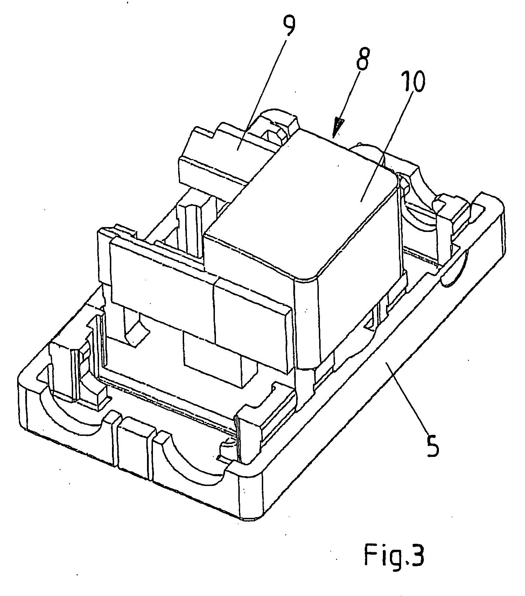

In der Einbaulage, die in Figur 3 veranschaulicht ist, ist das aus den beiden Modulen 9, 10 gebildete Gehäusezusatzteil 8 in einer zweiten möglichen Orientierung in die Ausnehmung 2 eingesetzt, wobei dann das erste Modul 10 den zweiten Rohrleitungsabschnitt 6 und das zweite Modul 9 den ersten Rohrleitungsabschnitt 7, der dann die Pumpe aufweist, überdeckt.

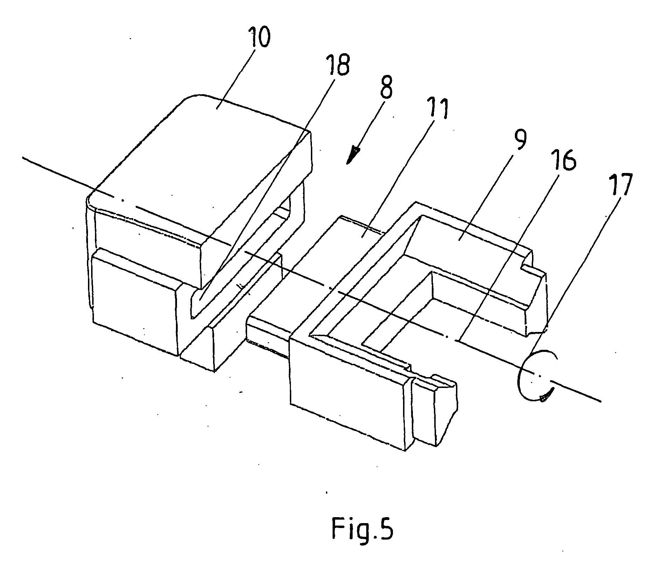

Das erste Modul 10 weist eine Oberseite auf, die quasi Bestandteil der Oberseite der Oberschale 4 ist, wie insbesondere aus Figur 1 ersichtlich ist, sowie eine Unterseite, die der Unterschale 5 zugewandt ist, wie beispielsweise aus den Figuren 2,3 und 6 ersichtlich ist. Das zweite Modul 9 weist eine Oberseite auf, die in der Montagelage gemäß Figur 1 bzw. gemäß Figur 2 Bestandteil der Oberseite der Oberschale 4 ist, wobei dann die Unterseite dieses Moduls 9 der Unterschale 5 zugewandt ist. In der zweitmöglichen Einbaulage, die in Figur 5 angedeutet ist, kann das zweite Modul 9 auch in umgekehrter Lage mit dem ersten Modul 10 verbunden werden, so dass dann die vorherige Oberseite der Unterschale 5 zugewandt ist, wohingegen die vorherige Unterseite die Oberseite der Oberschale 4 bildet oder zu dieser hin gerichtet ist. Das zweite Modul 9 kann eine entsprechende Aufnahme für unterschiedliche Pumpen aufweisen, so dass das Modul 9 in der einen Ausrichtung für eine Art Pumpe geeignet und bestimmt ist, während es in der anderen Ausrichtung für eine andere Art von Pumpe 3 geeignet und bestimmt ist.

Die Aufnahme des zweiten Moduls 9 kann aber auch so gestaltet sein, dass in der anderen Ausrichtung ein Aufnahmebereich für eine Pumpe vorgesehen ist, der spiegelbildlich zu der einen Ausrichtung des Aufnahmebereichs ist. Hierdurch kann bei einer zu ändernden Positionierung der Pumpe in den Rohrabschnitt 7 erreicht werden, dass die Ausrichtung der Pumpenelektronik samt Kabelführung unverändert bleiben kann, wenn das aus den Modulen gebildete Gehäusezusatzteil 8 von der ersten Einbaulage gemäß Figur 2 um eine gedachte Mittelachse 14 in Richtung des Bewegungspfeils 15 in die zweite Einbaulage gemäß Figur 3 eingebaut wird.

Wie in Figur 5 veranschaulicht, kann das zweite Modul 9 relativ zum ersten Modul 10 um eine die beiden Module 9, 10 durchsetzende gedachte Längsachse 16 in Richtung des Bewegungspfeils 17 um 180° gedreht werden, um eine der beiden Alternativlagen einzunehmen.

Vorzugsweise ist das zweite Modul 9, welches in Montagesolllage die Pumpe 3 aufnimmt und umfasst, so ausgestattet, dass es einen zur Außenseite der Oberschale 4 offenen Bereich aufweist, in dem eine Steuerelektronik der Pumpe 3 angeordnet ist, so dass diese nach außen Wärme abgeben kann.

Die beiden Module 9, 10 weisen ineinander greifende Führungs- und Klemmelemente auf, wobei auch gegebenenfalls die Oberschale 4 und/oder die Unterschale 5 entsprechende Führungs- und Klemmelemente zur Ausrichtung und Fixierung der Module 9, 10 aufweisen können.

Wie insbesondere aus Figur 5 ersichtlich, weist beispielsweise dazu das erste Modul 10 an seiner dem zweiten Modul 9 zugewandten Seitenfläche eine polygonale, im Ausführungsbeispiel rechteckige Ausnehmung 18 auf, in die ein passender Steckzapfen 11 des zweiten Moduls 9 passend einsteckbar ist, so dass eine Führung und Klemmung erreicht wird.

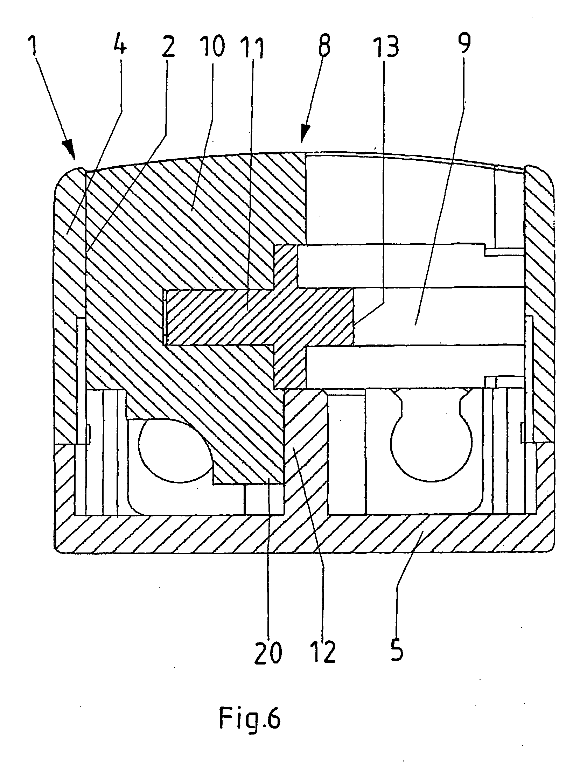

Wie insbesondere aus Figur 6 ersichtlich, weist die Unterschale 5 einen Klemmsteg 12 zwischen den beiden Rohrleitungsabschnitten auf, an dem sich ein Vorsprung 20 des ersten Moduls 10 abstützt, wobei eine dem zweiten Modul 9 abgewandte Seitenfläche des ersten Moduls 10 sich an einer Innenwand der Oberschale 4 und/oder der Unterschale 5 abstützt. Auch hierdurch wird eine Klemmung und Führung erreicht.

Wie insbesondere aus Figur 1 ersichtlich, liegt in der Montagesolllage die Oberseite des ersten Moduls 10 flächenbündig in der von der Oberseite der Oberschale 4 aufgespannten Ebene. Hierdurch werden störende Vorsprünge an der Frontseite der Oberschale 4 vermieden.

Die Erfindung ist nicht auf das Ausführungsbeispiel beschränkt, sondern im Rahmen der Offenbarung vielfach variabel.

## Patentansprüche

1. Anordnung zur wärmedämmenden Installation von zwei zueinander parallelen Rohrleitungsabschnitten (6,7) mit integrierten Armaturen oder Armaturenbaugruppen und in einen Rohrleitungsabschnitt integrierter Pumpe (3), wobei die Rohrleitungsabschnitte (6,7) samt Armaturen oder Armaturenbaugruppen und Pumpe von einem Gehäuse (1) aus Wärme-Isoliermaterial umgeben sind und das Gehäuse (1) aus einer Unterschale (5), einer Oberschale (4) sowie einem in eine Ausnehmung (2) der Oberschale (4) eingepassten Gehäusezusatzteil (8) besteht, wobei die Ausnehmung (2) und das Gehäusezusatzteil (8) einen Teilbereich beider Rohrleitungsabschnitte (6,7) überdeckt, **dadurch gekennzeichnet, dass** das Gehäusezusatzteil (8) aus zwei aus Wärmeisoliermaterial bestehenden Modulen (9,10) besteht, die zu einer Montageeinheit zusammensetzbar oder zusammengesetzt sind, wobei ein erstes Modul (10) einen Teilbereich der Ausnehmung (2) der Oberschale (4) ausfüllt, der im Bereich eines ersten Rohrleitungsabschnittes (6,7) liegt, und ein zweites Modul (9) eine in den zweiten Rohrleitungsabschnitt (6,7) integrierte Pumpe (3) aufnimmt und umfasst, und dass das aus den beiden Modulen (9,10) gebildete Gehäusezusatzteil (8) in einer ersten Einbaulage in die Ausnehmung (2) einsetzbar ist, in der das erste Modul (10) den ersten Rohrleitungsabschnitt (6) und das zweite Modul (9) den zweiten Rohrleitungsabschnitt (7) überdeckt, sowie in einer zweiten Einbaulage, in der das erste Modul (10) den zweiten Rohrleitungsabschnitt (7) und das zweite Modul (9) den ersten Rohrleitungsabschnitt (6) überdeckt.

2. Anordnung nach Anspruch 1, **dadurch gekennzeichnet, dass** das erste Modul (10) eine Oberseite aufweist, die Bestandteil der Oberseite der Oberschale (4) ist und eine Unterseite, die der Unterschale (5) zugewandt ist, und dass das zweite Modul (9) eine Oberseite aufweist, die in Montagesolllage entweder Bestandteil der Oberseite der Oberschale (4) oder der Unterschale (5) zugewandt ist und eine Unterseite, die entweder der Unterschale (5) zugewandt ist oder Bestandteil der Oberseite der Oberschale (4) ist, wobei das zweite Modul (9) in beiden Alternativlagen an das erste Modul (10) anfügbar oder ansteckbar ist.

3. Anordnung nach Anspruch 1 oder 2, **dadurch gekennzeichnet, dass** das aus den beiden Modulen (9,10) gebildete Gehäusezusatzteil (8) zum Überführen aus der ersten Einbaulage in die zweite Einbaulage um eine gedachte Mittelachse (14) um 180° drehbar ist, die orthogonal die Oberschale (4) und die Unterschale (15) durchsetzt.

4. Anordnung nach Anspruch 2 oder 3, **dadurch gekennzeichnet, dass** das zweite Modul (9) relativ zum ersten Modul (10) um eine die beiden Module durchsetzende gedachte Längsachse (16) um 180° drehbar ist, um eine der beiden Alternativlagen einzunehmen.

5. Anordnung nach einem der Ansprüche 1 bis 4, **dadurch gekennzeichnet, dass** das zweite Modul (9), welches in Montagesolllage die Pumpe (3) aufnimmt und umfasst, einen zur Außenseite der Oberschale (4) offenen Bereich aufweist, in dem eine Steuerelektronik der Pumpe (3) angeordnet ist.

6. Anordnung nach einem der Ansprüche 1 bis 5, **dadurch gekennzeichnet, dass** die beiden Module (9,10) ineinander greifende Führungs- und Klemmelemente aufweisen.

7. Anordnung nach Anspruch 6, **dadurch gekennzeichnet, dass** das erste Modul (10) an seiner dem zweiten Modul (9) zugewandten Seitenfläche eine polygonale Ausnehmung (18) aufweist, und das zweite Modul (9) an seiner dem ersten Modul (10) zugewandten Seitenfläche einen passenden Steckzapfen (11) aufweist, der in Montagesolllage in die Ausnehmung (18) eingreift.

8. Anordnung nach einem der Ansprüche 1 bis 7, **dadurch gekennzeichnet, dass** die Unterschale (5) einen Klemmsteg (12) zwischen den beiden Rohrleitungsabschnitten aufweist, an dem sich ein Vorsprung (20) des ersten Moduls (10) abstützt, wobei eine dem zweiten Modul (9) abgewandte Seitenfläche des ersten Moduls (10) sich an einer Innenwand der Oberschale (4) und/oder Unterschale (5) abstützt.

9. Anordnung nach einem der Ansprüche 1 bis 8, **dadurch gekennzeichnet, dass** in Montagesolllage die Oberseite des ersten Moduls (10) und/oder des zweiten Moduls (9) bündig in der von der Oberseite der Oberschale (4) aufgespannten Ebene liegt.

## Claims

1. An assembly for the heat-insulating installation of two parallel pipe portions (6, 7) with integrated valves or valve assemblies and a pump (3) integrated in a pipe portion, the pipe portions (6, 7) together with the valves or valve assemblies and the pump being surrounded by a housing (1) made of heat-insulating material, and the housing (1) comprising a lower shell (5), an upper shell (4) and an additional housing part (8) fitted in a recess (2) of the upper shell (4), the recess (2) and the additional housing part (8) covering a partial region of both pipe portions (6, 7), **characterized by** that the additional housing part (8) comprises two modules (9, 10) made of a heat-insulating material, which can be assembled or are assembled so to form a mounting unit, wherein a first module (10) fills a partial region of the recess (2) of the upper shell (4), which is in the region of a first pipe portion (6, 7), and a second module (9) receives and includes a pump (3) integrated in the second pipe portion (6, 7), and that the additional housing part (8) formed of the two modules (9, 10) can be inserted in the recess (2) in a first mounting position, in which the first module (10) covers the first pipe portion (6) and the second module (9) covers the second pipe portion (7), and in a second mounting position, in which the first module (10) covers the second pipe portion (7) and the second module (9) covers the first pipe portion (6).

2. The assembly according to claim 1, **characterized by** that the first module (10) comprises an upper side that is part of the upper side of the upper shell (4), and a lower side that is directed toward the lower shell (5), and that the second module (9) comprises an upper side that is, in the intended mounting position, either part of the upper side of the upper shell (4) or is directed toward the lower shell (5), and a lower side that is either directed toward the lower shell (5) or is part of the upper side of the upper shell (4), wherein the second module (9) in both alternative positions can be added to or fitted on the first module (10).

3. The assembly according to claim 1 or 2, **characterized by** that the additional housing part (8) formed of the two modules (9, 10) can be rotated by 180° about an imaginary central axis (14) for transfer from the first mounting position into the second mounting position, said imaginary central axis orthogonally passing through the upper shell (4) and the lower shell (15).

4. The assembly according to claim 2 or 3, **characterized by** that the second module (9) can be rotated relative to the first module (10) by 180° about an imaginary longitudinal axis (16) passing through the two modules, in order to move into one of the two alternative positions.

5. The assembly according to one of claims 1 to 4, **characterized by** that the second module (9), which receives and includes, in the intended mounting position, the pump (3), comprises a section being open toward the outside of the upper shell (4), where an electronic controller of the pump (3) is disposed.

6. The assembly according to one of claims 1 to 5, **characterized by** that the two modules (9, 10) comprise guiding and clamping elements that engage in each other.

7. The assembly according to claim 6, **characterized by** that the first module (10) has at its side face directed toward the second module (9) a polygonal recess (18), and the second module (9) has at its side face directed toward the first module (10) a matching plug-in pin (11) that, in the intended mounting position, engages in the recess (18).

8. The assembly according to one of claims 1 to 7, **characterized by** that the lower shell (5) comprises a clamping web (12) between the two pipe portions, at which a projection (20) of the first module (10) is supported, wherein a side face of the first module (10) directed away from the second module (9) is supported at an inner wall of the upper shell (4) and/or of the lower shell (5).

9. The assembly according to one of claims 1 to 8, **characterized by** that, in the intended mounting position, the upper side of the first module (10) and/or of the second module (9) is flush in the plane defined by the upper side of the upper shell (4).

## Revendications

1. Agencement d'installation isolant thermiquement de deux sections de tuyaux (6, 7) parallèles avec des vannes ou ensembles de vannes intégrés et une pompe (3) intégrée dans une section de tuyau, les sections de tuyaux (6, 7) avec les vannes ou ensembles de vannes et la pompe étant entourés par un logement (1) en une matière isolant thermiquement, et le logement (1) comprenant une coque inférieure (5), une coque supérieure (4) et une partie additionnelle (8) du logement assemblée dans un évidement (2) de la coque supérieure (4), l'évidement (2) et la partie additionnelle (8) du logement recouvrant une région partielle des deux sections de tuyaux (6, 7), **caractérisé en ce que** la partie additionnelle (8) du logement comprend deux modules (9, 10) réalisés en une matière isolant thermiquement, qui peuvent être ou sont reliés pour former une unité de montage, un premier module (10) rempliant une région partielle de l'évidement (2) de la coque supérieure (4), qui se trouve dans la région d'une première section de tuyau (6, 7), et un deuxième module (9) recevant et comprenant une pompe (3) intégrée dans la deuxième section de tuyau (6, 7), et que la partie additionnelle (8) du logement formée par les deux modules (9, 10) peut être insérée dans l'évidement (2) dans une première position de montage, dans laquelle le premier module (10) recouvre la première section de tuyau (6) et le deuxième module (9) recouvre la deuxième section de tuyau (7), et dans une deuxième position de montage, dans laquelle le premier module (10) recouvre la deuxième section de tuyau (7) et le deuxième module (9) recouvre la première section de tuyau (6).

2. Agencement selon la revendication 1, **caractérisé en ce que** le premier module (10) comprend une face supérieure qui fait partie de la face supérieure de la coque supérieure (4), et une face inférieure qui est dirigée vers la coque inférieure (5), et que le deuxième module (9) comprend une face supérieure qui, dans la position de montage de consigne, ou bien fait partie de la face supérieure de la coque supérieure (4) ou bien est dirigée vers la coque inférieure (5), et une face inférieure qui ou bien est dirigée vers la coque inférieure (5) ou bien fait partie de la face supérieure de la coque supérieure (4), le deuxième module (9) pouvant être ajouté ou attaché dans les deux positions alternatives sur le premier module (10).

3. Agencement selon la revendication 1 ou 2, **caractérisé en ce que** la partie additionnelle (8) du logement formée à partir des deux modules (9, 10) peut être tournée par 180° autour d'un axe central imaginaire (14) pour le transfert à partir de la première position de montage dans la deuxième position de montage, cet axe central imaginaire passant orthogonalement à travers la coque supérieure (4) et la coque inférieure (15).

4. Agencement selon la revendication 2 ou 3, **caractérisé en ce que** le deuxième module (9) peut être tourné relativement au premier module (10) par 180° autour d'un axe longitudinal imaginaire (16) passant à travers les deux modules, pour arriver à une des deux positions alternatives.

5. Agencement selon une des revendications 1 à 4, **caractérisé en ce que** le deuxième module (9), qui reçoit et comprend, dans la position de montage de consigne, la pompe (3), une section étant ouverte vers l'extérieur de la coque supérieure (4), dans cette section une commande électronique de la pompe (3) étant disposée.

6. Agencement selon une des revendications 1 à 5, **caractérisé en ce que** les deux modules (9, 10) comprennent des éléments de guidage et de serrage qui viennent en prise les uns dans les autres.

7. Agencement selon la revendication 6, **caractérisé en ce que** le premier module (10) a à son côté dirigé vers le deuxième module (9) un évidement polygonal (18), et le deuxième module (9) a à son côté dirigé vers le premier module (10) un tenon d'emboîtement (11) associé, qui, dans la position de montage de consigne, vient en prise dans l'évidement (18).

8. Agencement selon une des revendications 1 à 7, **caractérisé en ce que** la coque inférieure (5) comprend une entretoise de serrage (12) entre les deux sections de tuyaux, sur laquelle une saillie (20) du premier module (10) s'appuie, et une face latérale du premier module (10) opposée au deuxième module (9) s'appuie sur une paroi intérieure de la coque supérieure (4) et/ou de la coque inférieure (5).

9. Agencement selon une des revendications 1 à 8, **caractérisé en ce que**, dans la position de montage de consigne, la face supérieure du premier module (10) et/ou du deuxième module (9) est placée en affleurement dans le plan défini par la face supérieure de la coque supérieure (4).
